# FASCICULE DE BREVET EUROPEEN

(11) **EP 1 902 409 B1**
(45) Date de publication et mention de la délivrance du brevet: **10.08.2011**
(21) Numéro de dépôt: 06778745.7
(22) Date de dépôt: 30.06.2006
(51) Int. Cl.: G06K 19/04

(54) **JETON A PUCE ELECTRONIQUE ET SON PROCEDE DE FABRICATION.**
SILICIUMCHIP-TOKEN UND VERFAHREN ZU SEINER HERSTELLUNG
SILICON CHIP TOKEN AND METHOD FOR MAKING SAME

(30) Priorité: 08.07.2005 FR 0507313
(43) Date de publication de la demande: 26.03.2008
(73) Titulaire: Gaming Partners International, 21420 Savigny-les-Beaune (FR)
(72) Inventeur: CHAPET, Pierre, F-21200 Beaune (FR)
(74) Mandataire: Tripoz, Inès
(86) Numéro de dépôt international: PCT/FR2006/001557
(87) Numéro de publication internationale: WO 2007/006893

(56) Documents cités:
- EP-A- 0 694 872
- WO-A-03/045661
- US-B1- 6 296 190

## Description

La présente invention concerne l'implantation de dispositifs d'identification à puce électronique sans contact dans des jetons en forme générale de disque comportant un corps en matière plastique, notamment dans des jetons de jeu ou de casino.

D'une façon générale les jetons de jeu sont fabriqués en matière plastique rigide et résistante aux rayures pour obtenir une structure d'ensemble robuste. Les jetons de jeu présentent des motifs variés en dessins ou en couleurs pour former un décor plus ou moins complexe et réduire les risques de falsification et/ou de reproduction frauduleuse. Par ailleurs l'utilisation en association à la valeur des jetons de codes de couleurs et de motifs colorés notamment sur la tranche des jetons permet aux croupiers ou autres utilisateurs par simple visualisation d'identifier et/ou de trier rapidement les jetons même empilés.

Le brevet US 3.953.932 (Graves) décrit un jeton en forme de disque avec indentations au centre de la tranche et dont le corps comporte une âme annulaire obtenue par une première injection en matière plastique et une nappe de recouvrement obtenue par une seconde injection en matière plastique avec sur chaque face une cavité dans laquelle est fixée une étiquette porteuse d'un décor.

Le brevet EP 0444373 appartenant au Demandeur décrit un jeton de casino dit 'sans valeur' en forme de disque avec indentations au centre de la tranche et dont le corps comporte une plaquette métallique circulaire mince formant lest sur laquelle est réalisée par première injection une âme en matière plastique dont la partie périphérique est recouverte d'une nappe obtenue par une seconde injection de matière plastique avec une double couche de matière plastique au niveau de la périphérie de la plaquette métallique, le jeton comportant sur chaque face une cavité dans laquelle est fixée une étiquette porteuse d'un décor.

Pour lutter contre la fraude et faciliter le comptage et le suivi des jetons, notamment dans une salle de jeu ou un casino, ont été proposés des jetons intégrant des inserts constitués d'un module à circuit électronique à mémoire dans laquelle sont stockées des informations associées au jeton telles que, par exemple, son numéro ou code d'identification et/ou sa valeur numérique. Le plus souvent la communication entre le module à circuit électronique intégré au jeton et son poste de lecture/écriture extérieur est réalisée sans contact, on utilise alors un dispositif d'identification à puce électronique sans contact comportant une puce ou circuit électronique associée à une antenne, en général à boucle circulaire, afin de pouvoir communiquer « sans contact » avec le poste de lecture/écriture selon la technique d'identification radiofréquence.

Le brevet US 4.969.549 (Eglise) décrit un jeton de payement utilisable dans les installations de téléphone public dans lequel le circuit électronique et son antenne sont encapsulés dans d'un disque en matière plastique de petit diamètre, compris entre 20 et 30mm, sans toutefois préciser son procédé de fabrication, le jeton étant par ailleurs traversé en son centre par un noyau axial conducteur.

Le brevet US 5.166.502 (Rendelman) décrit un jeton de casino dans lequel l'antenne et le circuit électronique sont disposés à l'intérieur d'un lest en métal lui même placé entre deux plaquettes faciales au centre d'un anneau en matière plastique injecté, le tout étant maintenu en place à l'aide de résine époxy et par une seconde injection recouvrant l'anneau et la périphérie des plaquettes. Ce jeton, de structure complexe et coûteuse à la fabrication, n'offre pas toute la sécurité souhaitée dans la mesure où il est possible d'accéder au circuit électronique par simple découpage d'une plaquette faciale sans pour autant détruire complètement la structure du jeton et rendre celui-ci inutilisable.

Le brevet US 6.296.190 (Rendelman) décrit un jeton de casino dans lequel l'antenne et le circuit électronique sont disposés à l'intérieur d'une coupelle en matière plastique fermée par un couvercle maintenu par de la résine époxy, la coupelle étant elle-même placée au centre d'un anneau en matière plastique injecté, le tout étant maintenu en place par une seconde injection recouvrant l'anneau et la périphérie de la coupelle (sans pour autant recouvrir au moins une partie du couvercle de la coupelle). Le jeton est terminé par la pose de deux plaquettes faciales maintenues par adhésif. Ce jeton, de structure complexe et coûteuse à la fabrication, n'offre pas toute la sécurité souhaitée dans la mesure où il est possible d'accéder au circuit électronique par simple découpage d'une plaquette faciale et dégagement du couvercle de la coupelle sans pour autant détruire complètement la structure du jeton et rendre celui-ci inutilisable.

Le brevet EP 0694872 appartenant au Demandeur décrit un jeton de casino dont le corps comporte un disque central constitué d'une coque rigide en matière plastique chargée de particule métallique et porteuse d'un dispositif d'identification électronique, et une couronne annulaire en matière plastique injectée autour du disque. Dans une première variante, la coque monobloc est injectée autour d'un boîtier de protection dans lequel le dispositif électronique a été préalablement intégré. Dans une seconde variante la coque est obtenue par solidarisation après mise en place du dispositif d'identification électronique d'un couvercle et d'un disque creux en matière plastique injectée. Quoique donnant de bons résultats, cette technique de fabrication des jetons à identifiant électronique présente des limites, notamment au niveau de l'épaisseur totale d'un jeton de casino pour laquelle il est délicat de descendre au-dessous de 3,3 mm d'épaisseur (pour un diamètre généralement compris entre 39 et 50 mm) voire quasiment impossible d'atteindre des épaisseurs de l'ordre de 3 mm, et au niveau des coûts de fabrication avec la réalisation séparée du disque central et la nécessité pour un jeton à tranche bicolore de réaliser trois injections de matière plastique distinctes.

Les brevets EP 0796049 et EP 0973420 du Demandeur montrent des jetons en forme de disque dont le corps est constitué de deux demi-disques en matière plastique injectée à projections axiales définissant au centre du jeton un logement pour l'identifiant électronique, les deux demi-disques étant solidarisés par l'injection par la tranche d'un joint en matière plastique. Cette technique qui permet selon certaines variantes d'obtenir des jetons à identifiant électronique à tranche bicolore avec seulement deux injections de matière plastique ne résout pas la question de la réduction de l'épaisseur du jeton pour des jetons de casino de diamètre compris entre 39 et 50 mm et n'est pas vraiment adaptée à la fabrication de jetons à tranche bicolore présentant des bandes colorées perpendiculaires à la tranche (parallèles à l'axe du jeton).

L'invention a pour but de proposer des jetons à dispositif d'identification électronique sans contact, notamment des jetons de casinos, en forme générale de disque dont le corps obtenu par injection de matière plastique présente une structure de fabrication simplifiée permettant une implantation facilitée de l'identifiant électronique tout en offrant la protection requise, notamment une structure adaptée à la réalisation de jetons d'épaisseur réduite et/ou adaptée à la réalisation de jetons à tranche multicolore.

A cette fin l'invention propose un jeton selon la revendication 1.

Ainsi la structure du corps du jeton permet d'obtenir en une seule injection la coque de protection du dispositif d'identification électronique et au moins une partie de la tranche du jeton. Il en résulte la possibilité de réduire le nombre d'injections de matière plastique nécessaires à la fabrication du corps, notamment en cas de corps à tranche multicolore et à bandes de couleurs parallèles à l'axe du jeton, et/ou la possibilité de réduire si nécessaire l'épaisseur de la portion centrale du jeton et par voie de conséquence l'épaisseur totale du jeton. De plus le surmoulage de l'insert par la première injection permet d'obtenir un maintien amélioré de celui-ci quasiment sur ses deux faces complètes par comparaison avec le maintien périphérique obtenu par la structure décrite dans le brevet EP 0444373 mentionné ci -avant. Ce maintien amélioré interdit toute possibilité de remplacement frauduleux de l'insert au risque de détruire complètement le jeton et le rendre inutilisable. Enfin la disposition de l'insert à puce électronique sans contact en position médiane dans l'épaisseur de l'âme du jeton facilite la lecture radiofréquence sans contact RFID de piles ou de colonnes de jetons

Le jeton selon l'invention tel que défini ci-dessus et/ou dans toutes ses variantes ou modes de réalisation constitue un jeton de jeu ou un jeton de casino.

Avantageusement selon une première variante de réalisation du jeton de l'invention l'âme définit en première injection au moins en partie la partie annulaire périphérique du jeton. Ceci permet d'obtenir sur la tranche et sur les faces du jeton des motifs d'injection dans la masse du corps du jeton et notamment s'étendant sur toute la hauteur de la tranche.

Selon une autre variante du jeton selon l'invention, l'âme définit en première injection au moins en partie la partie annulaire périphérique du jeton et la tranche du jeton par des projections radiales périphériques, groupées ou non, de préférence équi-réparties circonférenciellement et s'étendant de part et d'autre dudit corps et axialement sur la tranche. Cette variante est très intéressante pour réaliser des jetons à tranche porteuse d'un code de couleurs. En particulier selon encore une autre variante, la nappe de recouvrement définit avec l'âme la partie annulaire périphérique et la tranche du corps du jeton à l'exception de logements pourvu d'inclusions de tranche en matière plastique injectée obtenues par au moins une injection complémentaire.

Selon une autre variante du jeton selon l'invention, la zone périphérique de la portion centrale de l'âme comporte une pluralité d'ouvertures et dans lesquelles se projettent des portions de l'insert comportant ledit dispositif d'identification à puce électronique. Cette disposition permet de laisser des passages pour des projections associées aux des deux demi-coquilles du moule d'injection définissant l'âme et destinées à positionner et maintenir l'identifiant électronique pendant l'injection de l'âme. Avantageusement l'âme comporte au moins trois ouvertures équi-réparties circonférenciellement à la périphérie de la portion centrale de l'âme. Tout aussi avantageusement lesdites portions de l'insert se projetant au travers des ouvertures de l'âme sont suffisamment résistants pour permettre le maintien en place de l'insert pendant l'injection de l'âme du corps du jeton. De façon optionnelle le centre de la partie centrale de l'âme comporte sur au moins une de ses faces au moins un évidement facial. Cet évidemment facial axial permet d'éviter la déformation et/ou la détérioration de l'insert à identifiant électronique pendant l'injection de l'âme, notamment de soutenir avec un faible jeu le centre du dispositif d'identification électronique porteur du circuit électronique sans risque de pincement de ce dernier.

Afin de faciliter l'injection de la nappe de recouvrement et son ancrage sur l'âme la partie interne de la portion annulaire périphérique de l'âme comporte une gorge circulaire dans laquelle sont prévus des passages traversants de préférence équi-répartis circonférenciellement. Avantageusement les ouvertures et/ou le ou les éventuels évidements faciaux et/ou les passages traversants sont remplis de matière plastique par ladite seconde injection.

Selon encore une autre variante du jeton selon l'invention, celui comporte sur chaque face une cavité dans laquelle est fixée une étiquette porteuse d'un décor et/ou d'une marque et/ou d'un hologramme.

Le corps du jeton selon l'invention peut être réalisé en utilisant des matières plastiques colorées, de couleurs différentes ou non, obtenues à partir d'au moins un polymère de base choisi parmi les suivants:
- le polyméthacrylate de méthyle (PMMA);
- l'acrylonitrile-butadiène-styrène (ABS);
- les polyamides et leurs copolymères;
- le polyacétal et les copolymères d'acétal (POM/polyoxyméthylène);
- le polysulfure de phénylène (PPS)
- les poly(alkylènes térephtalate), notamment le polybutylène térephtalate (PBT);
- les polyuréthannes thermoplastiques (PUR);
- les polymères vinyliques, polychlorure de vinyle (PVC);
- les polyoléfines, notamment les polyéthylènes (PE) et les polypropylènes.

L'invention concerne également un procédé de fabrication d'un corps d'un jeton selon l'invention défini ci-avant dans toutes les variantes et comportant au moins les opérations suivantes :
- mise en place dans un premier moule d'injection, dont les deux demi-coquilles définissent une première empreinte correspondant à l'âme, en forme générale de disque, du corps du jeton, d'un insert comportant un dispositif d'identification à puce électronique sans contact ;
- maintien dudit insert au centre de la première empreinte par pincement axial entre les deux demi-coquilles du premier moule ;
- injection de l'âme du jeton ;
- mise en place de l'âme du jeton dans un second moule d'injection, dont les deux demi-coquilles définissent une seconde empreinte correspondant à la totalité ou à la quasi-totalité du corps du jeton ;
- maintien de ladite âme au centre de la seconde empreinte par pincement axial entre les deux demi-coquilles du second moule de la portion centrale de l'âme;
- injection de la nappe de recouvrement;
- injection(s) complémentaire(s) éventuelles d'inclusions de tranche pour compléter le corps du jeton si nécessaire ;
- et optionnellement détourage du corps de jeton pour parfaire la tranche du jeton. Avantageusement le pincement axial de la première injection et/ou le pincement axial de la seconde injection est réalisé au niveau de la zone périphérique de la partie centrale de l'âme du jeton.

Selon un exemple de réalisation du jeton qui ne fait pas partie de l'invention, notamment d'un jeton de jeu ou de casino, le jeton en forme générale de disque comporte un corps obtenu par une seule injection de matière plastique incorporant un insert noyé lors de l'injection dans la matière plastique de la partie centrale dudit corps et comportant un dispositif d'identification à puce électronique sans contact, en ce que la périphérie de la partie centrale de corps comporte une pluralité d'ouvertures et dans lesquelles se projettent des portions de l'insert comportant ledit dispositif d'identification à puce électronique et en ce que lesdites portions de l'insert se projetant au travers desdites ouvertures sont suffisamment résistantes pour permettre le maintien en place de l'insert pendant l'injection du corps du jeton. Avantageusement la partie centrale du corps du jeton comporte sur chaque face une cavité dans laquelle est disposée et fixée une étiquette porteuse d'un décor et/ou d'une marque et/ou d'un hologramme, les ouvertures étant optionnellement préalablement bouchées, par exemple par de la résine époxy.

L'invention concerne également un jeton en forme de disque, notamment un jeton de jeu ou un jeton de casino, comportant un corps obtenu par injection de matière plastique et présentant un diamètre supérieur ou égal à 39mm et dont l'épaisseur maximale ne dépasse pas 3,3 mm, l'épaisseur de la partie centrale du corps étant de l'ordre de 2,5 mm.

D'autres buts, caractéristiques et avantages de la présente invention apparaîtront à la lecture de la description qui va suivre de deux modes de réalisation préférentiels de l'invention donnés à titre d'exemple non limitatif, en référence aux dessins ci-joints dans lesquels :
- les figures 1a et 1b représentent respectivement une vue schématique de face et une vue de profil montrant la tranche, d'un jeton de jeu selon un mode de réalisation de l'invention obtenu par deux injections de matière plastique colorée ;
- la figure 2 représente une vue schématique de face de l'âme du jeton illustré aux les figures 1a et 1b telle qu'obtenue par la première injection;
- la figure 3 représente une vue schématique en coupe diamétrale selon la ligne AA de l'âme du jeton illustré aux figures 1a et 1b montrée dans le moule de la première injection;
- la figure 4 représente une vue schématique de face du corps du jeton illustré aux figures 1a et 1b telle qu'obtenu par la seconde injection avant la pose des étiquettes faciales ;
- la figure 5 représente une vue schématique de face d'un jeton de jeu selon un exemple de réalisation obtenu par une injection de matière plastique colorée; et
- la figure 6 représente une vue schématique de face du corps du jeton illustré à la figure 5.

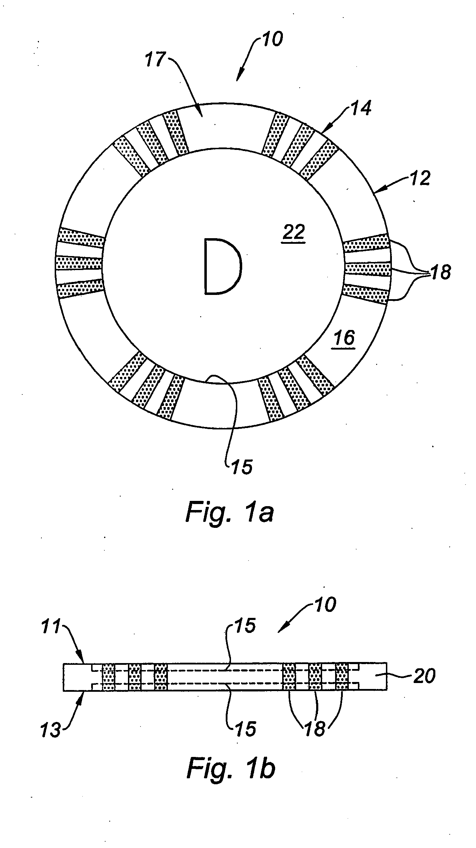

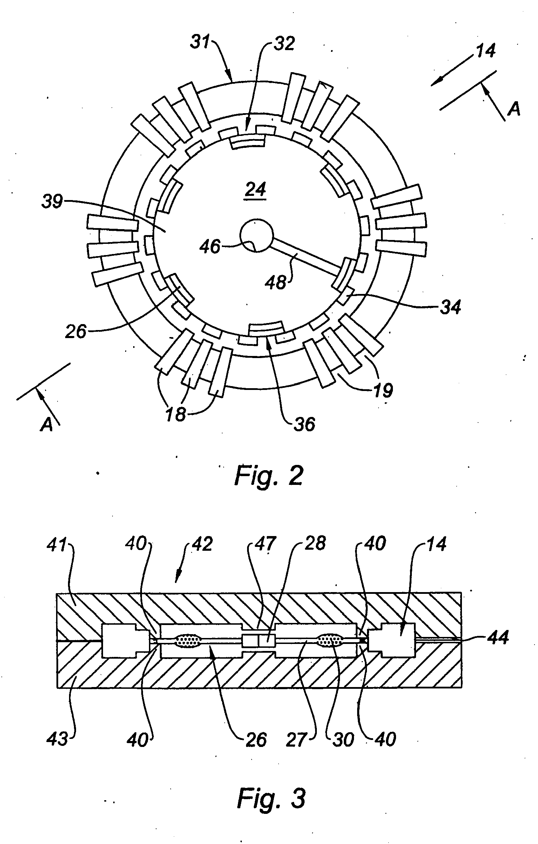

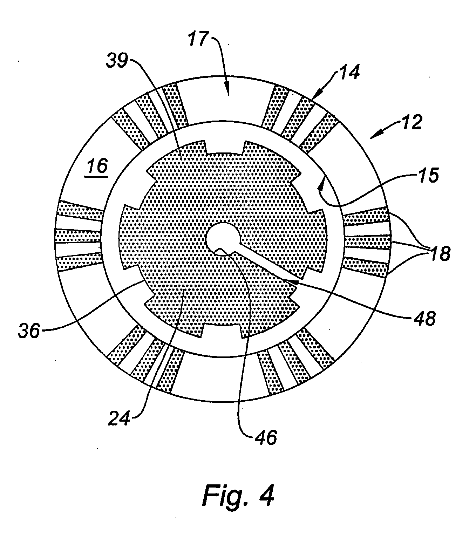

Selon un mode de réalisation de l'invention le jeton de jeu multi-injecté 10 en forme de disque en matières plastiques colorées, illustré aux figures 1a et 1b, présente un corps 12 constitué d'une âme 14 porteuse d'un insert comportant un dispositif d'identification à puce électronique sans contact (voir les figures 2 et 3) et obtenue par une première injection de matière plastique d'une première couleur (représentée schématiquement en pointillé pour faciliter la compréhension des figures 1a-1b et 4) et recouverte sur sa partie périphérique par une nappe de recouvrement 16 obtenue par une seconde injection en matière plastique de couleur différente, l'âme 14 portant en périphérie des projections 18 à extension radiale et/ou latérale qui apparaissent par affleurement en surface de la nappe de recouvrement 16 sur les faces 11 et 13 et sur la tranche 20 du jeton. En l'espèce les trois projections 18 sont parallèles à l'axe du jeton 10 (perpendiculaires à la tranche 20 de façon à réaliser un motif bicolore de cinq barres de couleur. Il est ainsi possible de réaliser, pris dans la masse du corps du jeton pour résister aux falsifications, des décors colorés de faces et/ou de tranche susceptibles notamment d'être distinguer visuellement et d'associer à ces décors ou motifs de barres de couleur une codification des jetons en fonction par exemple de leur valeur. D'une façon classique ces motifs de barres sont répétés (par exemple 6 ou 8 fois) et équi-répartis circonférenciellement notamment sur la tranche 20 pour permettre l'identification visuelle ou optique du jeton quelle que soit l'orientation du jeton.

Le jeton est complété par la fixation dans la cavité centrale 15 de faible profondeur prévue sur chaque face 11 et 13 d'une étiquette 22 porteuse d'un décor D (par exemple imprimé ou sérigraphié) et/ou d'une marque et/ou d'un hologramme.

Bien entendu, l'invention n'est pas limitée à des motifs de tranche sous forme de barres perpendiculaires à la tranche, ni à des motifs de barres de couleur à trois projections 18 (des variantes de jetons selon l'invention comportent des motifs à 1 à 4 projections). L'invention n'est pas non plus limitée à des jetons bicolores mais concerne également des jetons à 3, 4 injections et plus dans lesquels au moins une injection additionnelle d'une matière plastique de couleur distincte de celles des injections précédentes est réalisée directement dans des logements 19 (visibles à la figure 2) définis par les espaces en creux entre les projections 18.

Telle qu'illustrée sur les figures 2 et 3, l'âme 14 présente une forme générale de disque et comporte une portion centrale 24 définissant la partie centrale du jeton et dans laquelle est noyé un insert circulaire 26 (montré en coupe sur la figure 3) comportant le dispositif d'identification à puce électronique sans contact 27 (ou identifiant électronique) principalement constitué d'un circuit électronique 28 à émetteur-récepteur et d'une antenne circulaire bobinée 30 disposée autour du circuit 28. Le dispositif d'identification électronique 27 y compris l'émetteur-récepteur et l'antenne périphérique est placé entre deux films de protection minces et résistants soudés en périphérie, pour former une enveloppe rigide ou semi-rigide, l'ensemble de l'insert 26 se présentant sous la forme d'une pastille mince d'une épaisseur maximale de l'ordre d'un millimètre et de diamètre de l'ordre de 25 mm. Autour de la portion centrale 24 est prévue la portion annulaire périphérique 31 de l'âme 14 porteuse des projections 18. La partie interne de la portion 31 comporte sur chaque face du jeton une gorge circulaire 32 dans laquelle débouchent des passages traversants 34 équi-répartis circonférenciellement, ces passages 36 ayant pour but l'écoulement de matière plastique lors de la seconde injection et de parfaire l'ancrage de la nappe de recouvrement 16.

D'une façon générale, le dispositif d'identification électronique 27 comporte un circuit électronique 28 incorporant une mémoire PROM portant des informations concernant le jeton et/ou la personne ou l'objet associée au jeton, par exemple un code d'identification fixe numérique ou alphanumérique de 64 bits (comportant un ou plusieurs champs tels que: le numéro de série, l'identification d'un produit, d'un lot ou d'un lieu, une valeur numérique associée au jeton, etc.), et un émetteur-récepteur radiofréquence RFID 28 à antenne circulaire périphérique adapté pour être alimenté par couplage inductif à partir des ondes modulées d'un poste de lecture (non représenté). Dans la pratique, l'émetteur-récepteur est susceptible d'échanger sans contact par ondes modulées des données avec un poste de lecture placé à distance (à titre d'exemple non limitatif entre 15 cm et 2 m), la fréquence de travail se situant entre 10 kHz et 20 MHz. Le dispositif électronique à mémoire permet par exemple de lutter contre les vols et/ou de faciliter la gestion et l'inventaire d'un lot d'objets dans une espace défini (aires de stockage, entrepôts, magasins). Bien entendu sans sortir du cadre de l'invention, le dispositif d'identifiant électronique 27 à mémoire de type non reprogrammable (lecture seule) peut être remplacé par un dispositif reprogrammable à code évolutif avec possibilité de lecture et écriture en mémoire.

Il est à noter que l'invention n'est pas limitée à ce type de protection à film mince pour identifiant électronique mais concerne également l'intégration de tout identifiant électronique dans une enceinte de protection pour autant que son épaisseur soit compatible avec l'épaisseur finale désirée pour le jeton, notamment des identifiants électroniques noyés dans une pastille de résine durcie notamment de type époxy et/ou rapportés sur une plaque mince en matériau composite.

La périphérie de la portion centrale 24 de l'âme 14 comporte six ouvertures équi-réparties 36 dans lesquelles se projettent des portions de la périphérie de l'insert 26. Ces ouvertures 36 (présentant en l'espèce la forme de créneaux à titre d'exemple non limitatif) ont pour but de permettrent le pincement de la périphérie de l'insert 26 par des projections 40 prévues en vis à vis sur les faces internes des deux demi-coquilles 41, 43 du moule de la première injection 42, ce dernier comportant au niveau du plan de joint médian au moins un orifice d'injection 44 en face de la tranche 20 du jeton. Le positionnement axial de l'insert dans le moule 42 est tel que l'insert 26 se trouve sensiblement en position médiane au niveau du plan de joint. On notera que le pincement peut être obtenu par des projections 40 ou doigts fixes (telles qu'illustrées sur la figure 3) et/ou des projections ou doigts mobiles dans l'une ou les deux demi-coquilles.

De plus le centre de la portion centrale 24 de l'âme comporte sur chaque face un évidement facial 46. Ces évidements 46 correspondent à deux projections en vis à vis 47 également prévues sur les faces internes des demi-coquilles 41 et 43 pour servir de butée d'appui (avec un faible jeu de débattement) pour l'insert 26 à identifiant électronique pendant l'injection de l'âme et éviter la déformation et/ou la détérioration de l'insert toutefois sans risque d'écrasement du circuit électronique. Un canal de surface 48 est prévu sur chaque face du jeton (de façon optionnelle) entre chaque évidemment 46 et la gorge 32 correspondante.

Sans sortir du cadre de l'invention, la localisation des ouvertures 36, située de préférence en périphérie de l'âme, peut être déplacée sur la partie centrale de l'âme en prenant soin d'assurer le maintien sans déformation de l'insert et d'éviter de détériorer le circuit 28 et la bobine de l'antenne.

La figure 4 montre le corps du jeton 12 défini en totalité ou en quasi-totalité au terme de la seconde injection par laquelle tout ou presque tout des faces 11 et 13 (notamment la partie périphérique 17 du corps du jeton) et de la tranche 20 du jeton sont définies au moins pour l'essentiel, la portion annulaire périphérique 31 de l'âme 14 étant recouverte de la nappe 16 à l'exception des projections 18 (et de façon optionnelle à l'exception des logements 19 inter-projections en cas d'injection(s) complémentaire(s) ultérieure(s) de barres de couleur additionnelle(s)), la nappe de la seconde injection 16 se poursuivant pour remplir les gorges 32, les ouvertures 36, les passages traversants 34, et éventuellement les évidements 46 et les canaux 48, et venir en affleurement avec la portion centrale 24 de l'âme 14 pour définir sur chaque face une cavité circulaire centrale de faible profondeur 15 (de l'ordre de 0,5 mm) servant de logement à l'étiquette en matière plastique décorée 22 fixée au jeton (comme représentée en tirets sur la figure 1b).

Sans caractère limitatif les jetons selon l'invention se présentant sous la forme d'un disque en général de diamètre compris entre 39 et 50 mm avec une épaisseur de l'ordre de 3,3 mm. La tranche du jeton peut être chanfreinée avec bords adoucis ou simplement à profil droit notamment si l'on souhaite pouvoir faire de la lecture optique à partir de la tranche des jetons. Si nécessaire le profil chanfreiné ou droit est terminé par détourage à la meule ou au tour.

En ce qui concerne les matériaux plastiques utilisés pour l'injection des jetons fabriqués dans le cadre de la mise en oeuvre de l'invention, notamment pour le jeton de jeu 10, ceux-ci sont obtenus à partir d'un polymère de base convenablement chargé (notamment en poids et matières colorées) et choisi parmi les suivants:
- le polyméthacrylate de méthyle (PMMA);
- l'acrylonitrile-butadiène-styrène (ABS);
- les polyamides et leurs copolymères;
- le polyacétal et les copolymères d'acétal (POM/polyoxyméthylène);
- le polysulfure de phénylène (PPS)
- les poly(alkylènes térephtalate), notamment le polybutylène térephtalate (PBT);
- les polyuréthannes thermoplastiques (PUR);
- les polymères vinyliques, polychlorure de vinyle (PVC);
- les polyoléfines, notamment les polyéthylènes (PE) et les polypropylènes.

A titre d'exemple non limitatif, on utilise un polyamide 6.6 chargé en poids de poudre de baryte ou de sulfate de baryum (jusqu'à environ 60% en poids). L'injection est réalisée entre 800 est 1400 bars avec une température d'injection de 280/300°C et une température de moule d'environ 50°C.

Bien entendu les compositions peuvent varier notamment par des charges incorporées dans les matériaux utilisés pour les diverses injections: par exemple en charges pondérales (baryte, poudres métalliques, oxyde de zinc, etc.) et en charges en colorants (oxyde de zinc, etc.) pour obtenir la teinte de couleur choisie pour chaque injection.

L'invention concerne également un procédé de fabrication d'un corps 12 d'un jeton selon l'invention défini ci-avant dans toutes les variantes et comportant au moins les opérations suivantes :
- mise en place dans un premier moule d'injection 42, dont les deux demi-coquilles 41,43 définissent une première empreinte correspondant à l'âme 14, en forme générale de disque, du corps du jeton, d'un insert 26 comportant un dispositif d'identification à puce électronique sans contact 27 ;
- maintien dudit insert 26 au centre de la première empreinte par pincement entre des projections axiales 40 prévues sur les deux demi-coquilles du premier moule ;
- injection de l'âme 14 du jeton ;
- mise en place de l'âme 14 du jeton dans un second moule d'injection, dont les deux demi-coquilles définissent une seconde empreinte correspondant à la totalité ou à la quasi-totalité du corps 12 du jeton ;
- maintien de ladite âme au centre de la seconde empreinte par pincement axial entre les deux demi-coquilles du second moule de la portion centrale de l'âme (de préférence au niveau des portions 39 de la zone périphérique de la partie centrale 24 de l'âme entre les ouvertures en créneaux 36 pour ne pas détériorer l'insert 26 et/ou l'identifiant électronique 27) ;
- injection de la nappe de recouvrement 16;
- injection(s) complémentaire(s) éventuelles d'inclusions de tranche pour compléter le corps du jeton si nécessaire;
- et optionnellement détourage éventuel du corps 12 de jeton pour parfaire la tranche 20 du jeton.

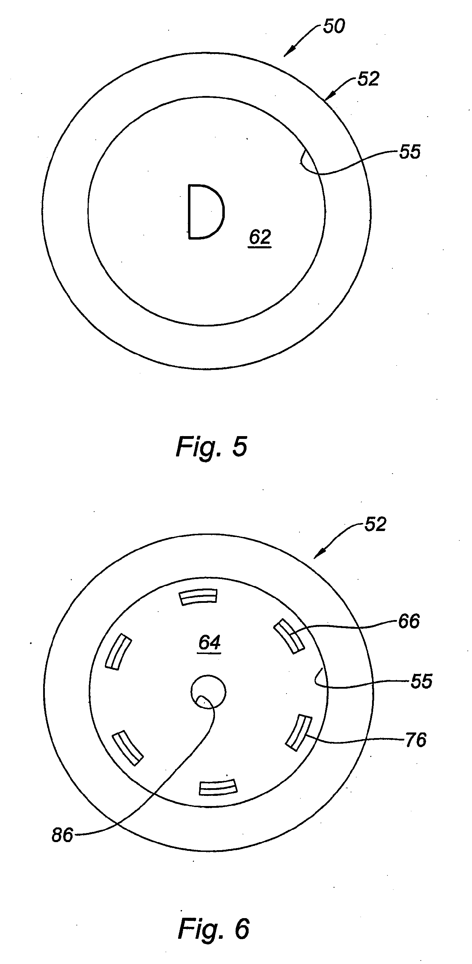

Selon un exemple de réalisation qui ne fait pas partie de l'invention, le jeton de jeu 50 en forme de disque en matière plastique (décrit en référence aux figures 5 et 6) présente un corps 52 porteur d'un insert 66 comportant un dispositif d'identification à puce électronique sans contact (identique à celui décrit sous la référence 26 en relation aux figures 2 et 3) et obtenu par une seule injection de matière plastique. Le corps 52 du jeton 50 comporte sur chaque face une cavité centrale 55 de faible profondeur et de grand diamètre (analogue à la cavité 15) destinée à recevoir une étiquette 62 pourvue d'un décor D (analogue à l'étiquette 22).

Comme illustré à la figure 6, la partie périphérique de la partie centrale 64 du corps 52 comporte, six ouvertures 76 équi-réparties circonférenciellement (analogues aux ouvertures 36) dans lesquelles se projettent des portions de la périphérie de l'insert 66 et sur chaque face un évidemment axial 86 (analogue à l'évidemment 46), les faces internes des demi-coquilles du moule (non représenté) correspondant au corps 52 présentent diverses projections correspondantes (analogues et remplissant les même fonctions de maintien et de protection de l'insert 66 que les projections 40 et 47 pour l'insert 26).

Le procédé de fabrication du jeton 50 comporte l'injection du corps 52 avec insertion de l'insert 66 à identifiant électronique sans contact selon des opérations analogues à celles décrites ci-avant pour l'injection de l'âme 14, le rebouchage des ouvertures 76 et éventuellement des cavités 55, par exemple avec de la résine époxy, la mise en place et la fixation des étiquettes 62, et éventuellement un détourage éventuel du corps 52 du jeton. La matière plastique utilisée pour le jeton 50 peut être choisie dans la liste donnée ci-avant en référence au jeton 10.

Bien entendu l'invention n'est pas limitée aux jetons de jeu ou jetons de casino mais concerne également tous les types de jeton en forme de disque à corps en matière plastique injectée intégrant un identifiant électronique, tels que, sans caractère limitatif, les jetons de parking, les jetons de paiement et les contremarques et les badges d'identification des biens ou des personnes.

## Revendications

1. Jeton (10) en forme générale de disque, du type à corps (12) obtenu par multi-injection de matière plastique dont le corps de est constitué :
- d'une âme (14) du corps du jeton obtenue par une première injection de matière plastique comportant une portion centrale (24) définissant la partie centrale du corps dudit jeton et une portion périphérique (31) définissant au moins en partie la tranche (20) dudit corps du jeton; et
- d'une nappe de recouvrement (16) obtenue par une seconde injection de matière plastique pratiquée autour de la portion périphérique (31) de l'âme (14) réalisant avec l'âme tout ou presque tout de la tranche (20) et de la partie annulaire périphérique (17) du corps (12) du jeton;
le jeton étant **caractérisé en ce que** l'âme (14) du jeton incorpore un insert (26) noyé à la première injection dans la matière plastique de la partie centrale dudit corps et comportant un dispositif d'identification à puce électronique sans contact (27).

2. Jeton (10) selon la revendication 1, **caractérisé en ce que** l'âme (14) définit au moins en partie la partie annulaire périphérique (17) du corps (12) du jeton.

3. Jeton (10) selon la revendication 2, **caractérisé en ce que** l'âme (14) définit au moins en partie la partie annulaire périphérique (17) du jeton et la tranche (20) du jeton par des projections radiales périphériques (18) s'étendant de part et d'autre dudit corps (12) et axialement sur la tranche (20).

4. Jeton (10) selon la revendication 3, **caractérisé en ce que** lesdites projections radiales périphériques (18) sont équi-réparties circonférenciellement.

5. Jeton (10) selon l'une des revendications 1 à 4, **caractérisé en ce que** ladite nappe de recouvrement (16) définit avec l'âme la partie annulaire périphérique et la tranche du corps du jeton à l'exception de logements (19) pourvus d'inclusions de tranche en matière plastique injectée obtenues par au moins une injection complémentaire.

6. Jeton (10) selon l'une de revendications précédentes, **caractérisé en ce que** la zone périphérique de la portion centrale de l'âme comporte une pluralité d'ouvertures (36) dans lesquelles se projettent des portions de l'insert (26) comportant ledit dispositif d'identification à puce électronique (27).

7. Jeton (10) selon la revendication 6, **caractérisé en ce que** l'âme (14) comporte au moins trois ouvertures (36) équi-réparties circonférenciellement à la périphérie de la portion centrale (24) de l'âme.

8. Jeton (10) selon l'une des revendications 6 et 7, **caractérisé en ce que** lesdites portions de l'insert (26) se projetant au travers des ouvertures (36) de l'âme (14) sont suffisamment résistantes pour permettre le maintien en place de l'insert (26) pendant l'injection de l'âme du corps du jeton.

9. Jeton (10) selon l'une des revendications 6 à 9, **caractérisé en ce que** le centre de la partie centrale (24) de l'âme comporte sur au moins une de ses faces au moins un évidement facial (46).

10. Jeton (10) selon l'une des revendications 6 à 9, **caractérisé en ce que** la partie interne de ladite portion annulaire périphérique de l'âme (14) comporte une gorge (22) circulaire dans laquelle sont prévus des passages traversants (34) de préférence équi-répartis circonférenciellement.

11. Jeton (10) selon l'une des revendications 6 à 10, **caractérisé en ce que** lesdites ouvertures (36) et/ou le ou les éventuels évidements faciaux (46) et/ou lesdits passages traversants (34) sont remplis de matière plastique par ladite seconde injection.

12. Jeton (10) selon l'une des revendications précédentes, **caractérisé en ce que** le corps (12) du jeton comporte sur chaque face une cavité (15) dans laquelle est fixée une étiquette (22) porteuse d'un décor et/ou d'une marque et/ou d'un hologramme.

13. Jeton (10) selon l'une des revendications précédentes, **caractérisé en ce qu'**il est obtenu par des injections de matières plastiques de couleurs différentes.

14. Procédé de fabrication d'un corps (12) de jeton (10) selon l'une des revendications précédentes, **caractérisé en ce qu'**il comporte au moins les opérations suivantes :
- mise en place dans un premier moule d'injection (42), dont les deux demi-coquilles (41, 43) définissent une première empreinte correspondant à l'âme (12) du corps du jeton, d'un insert (26) comportant un dispositif d'identification à puce électronique sans contact (27) ;
- maintien dudit insert (26) au centre de la première empreinte par pincement axial entre les deux demi-coquilles (41, 43) du premier moule;
- injection de l'âme (14) du jeton ;
- mise en place de l'âme (14) du jeton dans un second moule d'injection, dont les deux demi-coquilles définissent une seconde empreinte correspondant à la totalité ou à la quasi-totalité du corps (12) du jeton ;
- maintien de ladite âme (14) au centre de la seconde empreinte par pincement axial entre les deux demi-coquilles du second moule de la portion centrale (24) de l'âme ;
- injection de la nappe de recouvrement (16).

15. Procédé selon la revendication 14, **caractérisé en ce qu'**il comporte en outre une étape d'injection(s) comptémentaire(s) d'inclusions de tranche pour compléter le corps du jeton.

16. Procédé selon l'une des revendications 14 et 15, **caractérisé en ce qu'**il comporte en outre une étape de détourage du corps (12) de jeton pour parfaire la tranche (20) du jeton.

17. Procédé de fabrication selon l'une des revendications 14 à 16, **caractérisé en ce que** le pincement axial de la première injection et/ou le pincement axial de la seconde injection est réalisé au niveau de la zone périphérique de la partie centrale (24) de l'âme (14) du jeton.

18. Jeton (10) selon l'une des revendications 1 à 13, **caractérisé en ce que** la matière plastique est obtenue à partir d'au moins un polymère de base choisi parmi les suivants:
- le polyméthacrylate de méthyle (PMMA);
- l'acrylonitrile-butadiène-styrène (ABS);
- les polyamides et leurs copolymères;
- le polyacétal et les copolymères d'acétal (POM/polyoxym éthylène);
- le polysulfure de phénylène (PPS)
- les poly(alkylènes térephtalate), notamment le polybutylène térephtalate (PBT);
- les polyuréthannes thermoplastiques (PUR);
- les polymères vinyliques, polychlorure de vinyle (PVC);
- les polyoléfines, notamment les polyéthylènes (PE) et les polypropylènes.

19. Jeton (10) selon l'une des revendications 1 à 13, en forme générale de disque **caractérisé en ce qu'**il comporte un corps (12,) présentant un diamètre supérieur ou égal à 39 mm et dont l'épaisseur maximale ne dépasse pas 3,3 mm, l'épaisseur de la partie centrale (24) du corps étant de l'ordre de 2,5 mm.

20. Jeton (10) selon l'une des revendications 1 à 13, **caractérisé en ce qu'**il constitue un jeton de jeu ou un jeton de casino.

## Claims

1. Generally disc-shaped token (10) of the type having a body (12) produced by multiple injection of plastic material, the body consisting of:
- a core (14) of the body of the token produced by a first injection of plastic material and having a central portion (24) defining the central portion of the body of said token and a peripheral portion (31) defining at least part of the edge (20) of said body of the token; and
- a covering layer (16) produced by a second injection of plastic material around the peripheral portion (31) of the core (14) producing in conjunction with the core all or almost all of the edge (20) and of the annular peripheral portion (17) of the body (12) of the token, which is **characterized in that** the core (14) of the token incorporates an insert (26) embedded in the plastic material of the central portion of said body during the first injection and including a contactless electronic microchip identification device (27).

2. Token (10) according to Claim 1, **characterized in that** the core (14) defines at least part of the annular peripheral portion (17) of the body (12) of the token.

3. Token (10) according to Claim 2, **characterized in that** the core (14) defines at least part of the annular peripheral portion (17) of the token and the edge (20) of the token by way of radial peripheral projections (18) that extend on either side of said body (12) and axially over the edge (20).

4. Token (10) according to Claim 3, **characterized in that** said radial peripheral projections (18) are evenly distributed in the circumferential direction.

5. Token (10) according to any one of Claims 1 to 4, **characterized in that** in conjunction with the core said covering layer (16) defines the annular peripheral portion and the edge of the body of the token except for housings (19) provided with injected plastic material edge inclusions produced by at least one complementary injection.

6. Token (10) according to any one of the preceding claims, **characterized in that** the peripheral region of the central portion of the core includes a plurality of openings (36) into which project portions of the insert (26) including said electronic microchip identification device (27).

7. Token (10) according to Claim 6, **characterized in that** the core (14) includes at least three openings (36) evenly distributed in the circumferential direction at the periphery of the central portion (24) of the core.

8. Token (10) according to either of Claims 6 and 7, **characterized in that** said portions of the insert (26) projecting through openings (36) in the core (14) are sufficiently strong to hold the insert (26) in place during injection of the core of the body of the token.

9. Token (10) according to any one of Claims 6 to 9, **characterized in that** the center of the central portion (24) of the core has at least one recess (46) on at least one of its faces.

10. Token (10) according to any one of Claims 6 to 9, **characterized in that** the internal portion of said annular peripheral portion of the core (14) includes a circular groove (22) including through passages (34) that are preferably evenly distributed in the circumferential direction.

11. Token (10) according to any one of Claims 6 to 10, **characterized in that** said openings (36) and/or any recesses (46) in the faces of the token and/or said through passages (34) are filled with plastic material by said second injection.

12. Token (10) according to any one of the preceding claims, **characterized in that** the body (12) of the token has on each face a cavity (15) into which is fixed a label (22) carrying a decoration and/or a mark and/or a hologram.

13. Token (10) according to any one of the preceding claims, **characterized in that** it is produced by injecting plastic materials of different
colors.

14. Method of fabricating a body (12) of a token (10) according to any one of the preceding claims, including at least the following operations:
- placing an insert (26) including a contactless electronic microchip identification device (27) in a first injection mold (42) two half-shells (41, 43) whereof define a first imprint corresponding to the core (14) of the body of the token;
- holding said insert (26) at the center of the first imprint by axially clamping it between the two half-shells (41, 43) of the first mold;
- injecting the core (14) of the token;
- placing the core (14) of the token in a second injection mold, two half-shells whereof define a second imprint corresponding to the whole or almost the whole of the body (12) of the token;
- holding said core (14) at the center of the second imprint by axially clamping the central portion (24) of the core between the two half-shells of the second mold;
- injecting the covering layer (16).

15. Method according to Claim 14, **characterized in that** it also includes a step of further injection(s) of edge inclusions to complete the body of the token.

16. Method according to either of Claims 14 and 15, **characterized in that** it also includes a step of machining the body (12) of the token to finish the edge (20) of the token.

17. Fabrication method according to any one of Claims 14 to 16, **characterized in that** the peripheral area of the central portion (24) of the core (14) of the token is axially clamped during the first injection and/or the second injection.

18. Token (10) according to any one of Claims 1 to 13, **characterized in that** the plastic material is obtained from at least one basic polymer selected from:
- polymethyl methacrylate (PMMA);
- acrylonitrile-butadiene-styrene (ABS);
- polyamides and copolymers thereof;
- polyacetal and acetal copolymers (POM/polyoxymethylene);
- phenylene polysulfide (PPS);
- polyalkylene terephthalates, in particular polybutylene terephthalate (PBT);
- thermoplastic polyurethanes (PUR);
- vinyl polymers, polyvinyl chloride (PVC);
- polyolefins, in particular polyethylenes (PE) and polypropylenes.

19. Token (10) according to any one of Claims 1 to 13, **characterized in that** it includes a body (12) having a diameter greater than or equal to 39 mm and a maximum thickness that does not exceed 3.3 mm, the thickness of the central portion (24) of the body being of the order of 2.5 mm.

20. Token (10) according to any one of Claims 1 to 13, **characterized in that** it constitutes a gaming chip or a casino chip.

## Patentansprüche

1. Marke (10) in der allgemeinen Form einer Platte des Typs Körper (12), erhalten durch Mehrfachinjektion von Kunststoffmaterial, wobei der Körper aus Folgendem besteht:
- einem Kern (14) des Körpers der Marke, erhalten durch eine erste Injektion von Kunststoffmaterial, umfassend einen zentralen Abschnitt (24), der den zentralen Teil des Körpers der Marke definiert, und einen peripheren Abschnitt (31), der mindestens teilweise die Scheibe (20) des Körpers der Marke definiert; und
- einer Deckschicht (16), erhalten durch eine zweite Injektion von Kunststoffmaterial, durchgeführt um den peripheren Abschnitt (31) des Kerns (14), die mit dem Kern die ganze oder fast die ganze Scheibe (20) und den peripheren ringförmigen Teil (17) des Körpers (12) der Marke herstellt;
wobei die Marke **dadurch gekennzeichnet ist, dass** der Kern (14) der Marke einen Einsatz (26) einschließt, der bei der ersten Injektion in das Kunststoffmaterial des zentralen Teils des Körpers eintaucht und eine Identifizierungsvorrichtung mit elektronischem Chip ohne Kontakt (27) umfasst.

2. Marke (10) nach Anspruch 1, **dadurch gekennzeichnet, dass** der Kern (14) mindestens teilweise den peripheren ringförmigen Teil (17) des Körpers (12) der Marke definiert.

3. Marke (10) nach Anspruch 2, **dadurch gekennzeichnet, dass** der Kern (14) mindestens teilweise den peripheren ringförmigen Teil (17) der Marke und die Scheibe (20) der Marke durch periphere radiale Vorsprünge (18) definiert, die sich auf beiden Seiten des Körpers (12) und axial auf der Scheibe (20) erstrecken.

4. Marke (10) nach Anspruch 3, **dadurch gekennzeichnet, dass** die peripheren radialen Vorsprünge (18) auf dem Umfang gleichmäßig verteilt sind.

5. Marke (10) nach einem der Ansprüche 1 bis 4, **dadurch gekennzeichnet, dass** die Deckschicht (16) mit dem Kern den peripheren ringförmigen Teil und die Scheibe des Körpers der Marke definiert, mit Ausnahme von Lagerungen (19), vorgesehen mit Scheibeneinschlüssen aus injiziertem Kunststoffmaterial, erhalten durch mindestens eine zusätzliche Injektion.

6. Marke (10) nach einem der vorhergehenden Ansprüche, **dadurch gekennzeichnet, dass** der periphere Bereich des zentralen Abschnitts des Kerns eine Vielzahl von Öffnungen (36) umfasst, in die Abschnitte des Einsatzes (26), umfassend die Identifizierungsvorrichtung mit elektronischem Chip (27), ragen.

7. Marke (10) nach Anspruch 6, **dadurch gekennzeichnet, dass** der Kern (14) mindestens drei Öffnungen (36) umfasst, die auf dem Umfang des zentralen Abschnitts (24) des Kerns gleich verteilt sind.

8. Marke (10) nach einem der Ansprüche 6 und 7, **dadurch gekennzeichnet, dass** die Abschnitte des Einsatzes (26), die durch die Öffnungen (36) des Kerns (14) ragen, ausreichend widerstandsfähig sind, um zu erlauben, den Einsatz (26) während der Injektion des Kerns des Körpers der Marke in seiner Position zu halten.

9. Marke (10) nach einem der Ansprüche 6 bis 9, **dadurch gekennzeichnet, dass** das Zentrum des zentralen Teils (24) des Kerns auf mindestens einer seiner Seiten mindestens eine vordere Aussparung (46) umfasst.

10. Marke (10) nach einem der Ansprühe 6 bis 9, **dadurch gekennzeichnet, dass** der innere Teil des peripheren ringförmigen Abschnitts des Kerns (14) eine Umfangsnut (22) umfasst, in der Durchführungen (34) vorgesehen sind, die vorzugsweise auf dem Umfang gleich verteilt sind.

11. Marke (10) nach einem der Ansprüche 6 bis 10, **dadurch gekennzeichnet, dass** die Öffnungen (36) und/oder die eventuelle(n) vordere(n) Aussparung(en) (46) und/oder die Durchführungen (34) durch die zweite Injektion mit Kunststoffmaterial gefüllt werden.

12. Marke (10) nach einem der vorhergehenden Ansprüche, **dadurch gekennzeichnet, dass** der Körper (12) der Marke auf jeder Seite einen Hohlraum (15) umfasst, in dem ein Etikett (22) befestigt ist, das eine Verzierung und/oder eine Kennzeichnung und/oder ein Hologramm trägt.

13. Marke (10) nach einem der vorhergehenden Ansprüche, **dadurch gekennzeichnet, dass** sie durch Injektionen von Kunststoffmaterialien in verschieden Farben erhalten wird.

14. Verfahren zur Herstellung eines Körpers (12) einer Marke (10) nach einem der vorhergehenden Ansprüche, **dadurch gekennzeichnet, dass** es mindestens die folgenden Vorgänge umfasst:
- Anbringen in einer ersten Spritzgussform (42), deren zwei Halbschalen (41, 43) einen ersten Abdruck definieren, der dem Kern (12) des Körpers der Marke entspricht, eines Einsatzes (26), umfassend eine Identifizierungsvorrichtung mit elektronischem Chip ohne Kontakt (27);
- Halten des Einsatzes (26) im Zentrum des ersten Abdrucks durch axiale Klemmung zwischen den zwei Halbschalen (41, 43) der ersten Form;
- Injizieren des Kerns (14) der Marke;
- Anbringen des Kerns (14) der Marke in einer zweiten Spritzgussform, deren zwei Halbschalen einen zweiten Abdruck definieren, entsprechend der Gesamtheit oder fast der Gesamtheit des Körpers (12) der Marke;
- Halten des Kerns (14) im Zentrum des zweiten Abdrucks durch axiale Klemmung zwischen den zwei Halbschalen der zweiten Form des zentralen Abschnitts (24) des Kerns;
- Injizieren der Deckschicht (16).

15. Verfahren nach Anspruch 14, **dadurch gekennzeichnet, dass** es außerdem einen Schritt einer/von zusätzlichen Injektion(en) von Scheibeneinschlüssen umfasst, um den Körper der Marke zu vervollständigen.

16. Verfahren nach einem der Ansprüche 14 und 15, **dadurch gekennzeichnet, dass** es außerdem einen Schritt des Beschneidens des Körpers (12) der Marke umfasst, um die Scheibe (20) der Marke zu vervollständigen.

17. Verfahren zur Herstellung nach einem der Ansprüche 14 bis 16, **dadurch gekennzeichnet, dass** die axiale Klemmung der ersten Injektion und/oder die axiale Klemmung der zweiten Injektion auf der Ebene des peripheren Bereichs des zentralen Teils (24) des Kerns (14) der Marke erfolgt.

18. Marke (10) nach einem der Ansprüche 1 bis 13, **dadurch gekennzeichnet, dass** das Kunststoffmaterial aus mindestens einem Basispolymer erhalten wird, ausgewählt aus den Folgenden:
- dem Methylpolymethacrylat (PMMA);
- dem Acrylnitril-Butadien-Styrol (ABS);
- den Polyamiden und ihren Copolymeren;
- dem Polyacetal und den Copolymeren von Acetal (POM/Polyoxymethylen);
- dem Phenylenpolysulfid (PPS)
- den Polyalkylenterephtalaten, insbesondere dem Polybutylenterephtalat (PBT);
- den thermoplastischen Polyurethanen (PUR);
- den Vinylpolymeren, Polyvinylchlorid (PVC);
- den Polyolefinen, insbesondere den Polyethylenen (PE) und den Polypropylenen.

19. Marke (10) nach einem der Ansprüche 1 bis 13 mit der allgemeinen Form einer Platte, **dadurch gekennzeichnet, dass** sie einen Körper (12) umfasst, aufweisend einen Durchmesser von mehr als oder gleich 39 mm, und dessen maximale Stärke 3,3 mm nicht übersteigt, wobei die Stärke des zentralen Teils (24) des Körpers im Bereich von 2,5 mm liegt.

20. Marke (10) nach einem der Ansprüche 1 bis 13, **dadurch gekennzeichnet, dass** sie eine Spielmarke oder eine Kasinomarke ist.
